# EUROPÄISCHE PATENTSCHRIFT

(11) **EP 2 055 208 B1**
(45) Veröffentlichungstag und Bekanntmachung des Hinweises auf die Patenterteilung: **19.05.2010**
(21) Anmeldenummer: 08016606.9
(22) Anmeldetag: 20.09.2008
(51) Int. Cl.: A47B 88/00

(54) **Befestigungsvorrichtung für Möbelteile**
Device for attaching items of furniture
Dispositif de fixation pour éléments de meuble

(30) Priorität: 02.11.2007 DE 202007015212 U
(43) Veröffentlichungstag der Anmeldung: 06.05.2009
(73) Patentinhaber: Anton Schneider GmbH & Co KG, 79341 Kenzingen (DE)
(72) Erfinder: Weber, Heimo, D-79194 Gundelfingen (DE)
(74) Vertreter: Kohler Schmid Möbus

(56) Entgegenhaltungen:
- EP-A- 0 740 917
- WO-A-96/28995
- DE-A1- 4 332 152
- DE-U- 7 047 932
- DE-U1- 29 914 388

## Beschreibung

Die Erfindung bezieht sich auf eine Befestigungsvorrichtung für zwei Möbelteile nach dem Oberbegriff von Anspruch 1.

Eine derartige Befestigungsvorrichtung ist beispielsweise durch die DE 7047932 U bekannt geworden.

Beispielsweise ist es zur Befestigung von Frontblenden an Schubladen bereits bekannt, die Frontblende mit einer Halterung in doppelwandige Schubladenzargen oder an bzw. in diesen angeordnete Aufnahmevorrichtungen einzuschieben, wobei durch federbelastete Hebel eine Verrastung erfolgt. Diese Verrastung muss natürlich so stark sein, dass beim normalen Ausziehen der Schublade die Verbindung zwischen der Schublade und der Frontblende starr bleibt. Andererseits ist es jedoch erwünscht, eine Möglichkeit zu schaffen, die Frontblende wieder leicht abzunehmen, entweder weil sie beschädigt ist, gereinigt werden oder eine andere Farbe erhalten soll. Das gleiche Problem ergibt sich auch bei Verbindungen zwischen anderen Möbelteilen.

Aus der DE 7047943 U ist eine lösbare Befestigung von winklig, z.B. rechtwinklig aufeinander stoßenden Leisten, insbesondere der Holme von zusammenlegbaren Laufgittern, bekannt. Die Befestigungsvorrichtung besteht aus einem mit einer Halteraste versehenen Bolzen, der in die eine Leiste einsetzbar ist, und aus einer unter Federwirkung stehenden Klinke, die in die andere Leiste einsetzbar ist, wobei in der Verbindungslage der Bolzen in eine Ausnehmung der anderen Leiste einragt und die in seine Raste eingreifende Klinke festgelegt ist, welche durch eine von außen zugängliche Handhabe auslösbar ist.

Um bei einer Befestigungsvorrichtung der eingangs genannten Art eine feste jedoch leicht lösbare Verbindung zu schaffen, ist erfindungsgemäß eine Befestigungsvorrichtung mit den Merkmalen von Anspruch 1 bereitgestellt.

Beim Verschieben der Halterung zum Hebel läuft deren Querplatte gegen die Auflaufschräge des vorderen Hebelarmes an und schwenkt diesen nach oben, wobei gleichzeitig der Hebel in Schubrichtung der Halterung verschoben wird. Hinter der Auflaufschräge gleitet dann die Querplatte in den Hakenteil des vorderen Hebelarmes und dieser schwenkt dann in seine Anfangsstellung in Richtung zur Auflage auf der Querachse zurück, wobei der Hebel durch die Feder wiederum nach vorne verschoben wird. Durch Abstützung des Hebels an der Querachse ergibt sich eine Selbsthemmung des Hebels gegenüber einer Öffnungsbewegung, sodass eine feste Verbindung gewährleistet ist. Zum Lösen der Teile wird dann durch Druck auf den hinteren Hebelarm gegen die Federkraft der vordere wieder angehoben und die Halterung und das mit ihr verbundene Möbelteil können entfernt werden. Damit ergeben sich einerseits eine feste Verbindung und andererseits eine einfache Möglichkeit zur Lösung derselben. Zur begrenzten Längsverschiebbarkeit des Hebels ist dieser mit einem Langloch auf seiner Drehachse gelagert. Dabei ist das Langloch so bemessen, dass bei Auflage der Vertiefung des vorderen Hebelarms auf der Querachse die Drehachse am hinteren und beim Einschieben der Halterung am vorderen Ende des Langloches anliegt. Die Querachse kann dabei doppelt ausgenutzt werden, nämlich einerseits zur Auflage des Hebelarmes und andererseits als zusätzliche Führung für die Halterung.

Nach einem weiteren Merkmal der Erfindung ist die als Druckfeder ausgebildete Feder auf einem etwa senkrecht am hinteren Hebelarm verlaufenden Ansatz angeordnet ist. Dabei ist vorzugsweise der hintere Hebelarm durch eine oberseitige Ausnehmung zugänglich, um eine gewollte Lösung des anderen Möbelteiles zu ermöglichen.

Vorzugsweise weist der vordere Hebelarm anschließend an seine Vertiefung für die Querachse einen etwa rechtwinkeligen, schräg nach unten gerichteten Absatz mit der Auflaufschräge für die Halterung auf, an welchen sich dann die Hakenvertiefung anschließt. Zweckmäßig ist die Anordnung der Teile so gestaltet, dass der vordere Hebelarm beim Einschieben der Halterung nach oben geschwenkt und das Langloch nach hinten gegen die Drehachse gedrückt wird. Dabei ist der Abstand zwischen der Drehachse und der Querachse größer als der Abstand zwischen der Vertiefung und der Querachse. In der eingeschnappten Stellung der Halterung ergibt sich dabei eine Wirkungslinie zwischen der Auflage des vorderen Hebelarmes auf der Halterung und der Querachse, welche ein Drehmoment in Verschlussrichtung zur Selbsthemmung des Hebels gegen ungewolltes Auslösen bewirkt.

Die Zeichnung zeigt ein Ausführungsbeispiel der Erfindung bei der Befestigung einer Frontblende an einer Schublade. Es stellen dar:
- Fig. 1: einen Querschnitt des vorderen Teils einer doppelwandigen seitlichen Schubladenzarge mit davor angeordneter Halterung einer nicht dargestellten Frontblende vor der Montage derselben,
- Fig. 2: eine Darstellung nach Fig. 1 mit angesetzter Halterung,
- Fig. 3: eine Darstellung nach Fig. 1 in einer Zwischenstellung,
- Fig. 4: eine Darstellung nach Fig. 1 mit fest eingesetzter Halterung.

Die Halterung 1 weist Befestigungsmittel für die nicht dargestellte Frontblende auf, an welche sich ein Abstandsglied 3 mit einer Querplatte 4 anschließt.

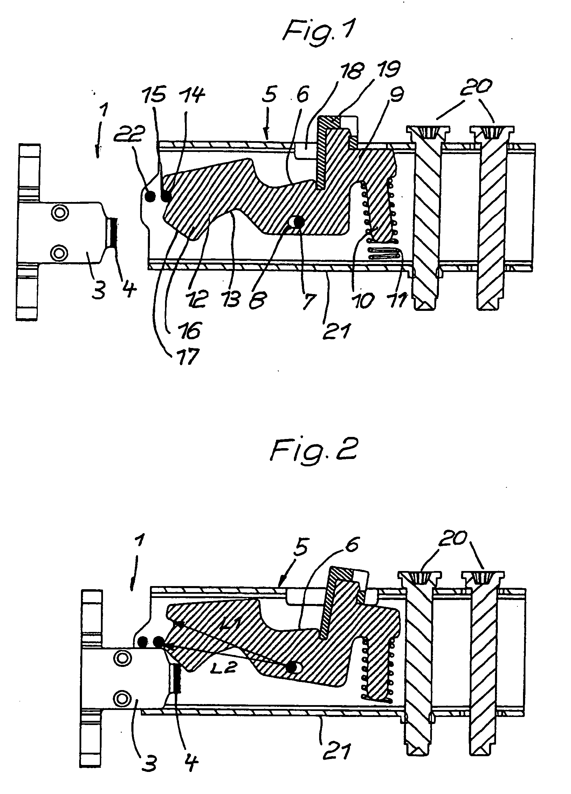

In einer seitlichen Schubladenzarge 5 einer nicht dargestellten Schublade ist ein zweiarmiger Hebel 6 um eine Drehachse 7 schwenkbar gelagert. Dabei ist der Hebel 6 für die Drehachse 7 mit einem Langloch 8 versehen, sodass er begrenzt verschiebbar gelagert ist. Sein hinterer Hebelarm 9 weist einen Ansatz 10 auf, welcher etwa senkrecht zu ihm verläuft und zur Lagerung einer Druckfeder 11 dient. Der vordere Hebelarm 12 ist mit einer hakenförmigen Ausnehmung 13 und außerdem mit einer Vertiefung 14 versehen, mit welcher er in der Ruhestellung nach Figur 1 auf einer Querachse 15 aufliegt. An diese Vertiefung 14 schliesst sich ein etwa rechtwinkeliger, schräg nach unten gerichteten Absatz 16 mit einer Auflaufschräge 17 für die Querplatte 4 der Halterung 1 an.

Des Weiteren ist der hintere Hebelarm 9 mit einem nach oben durch eine Ausnehmung 18 der Seitenzarge 5 hinausragenden Kopf 19 versehen, um diesen zum gewollten Lösen der Halterung 1 gegen den Druck der Feder 11 schwenken zu können. Die beiden Verstellschrauben 20 dienen in nicht näher gezeigter Weise zum Einstellen der Quer- und Höhenlage der Frontblende.

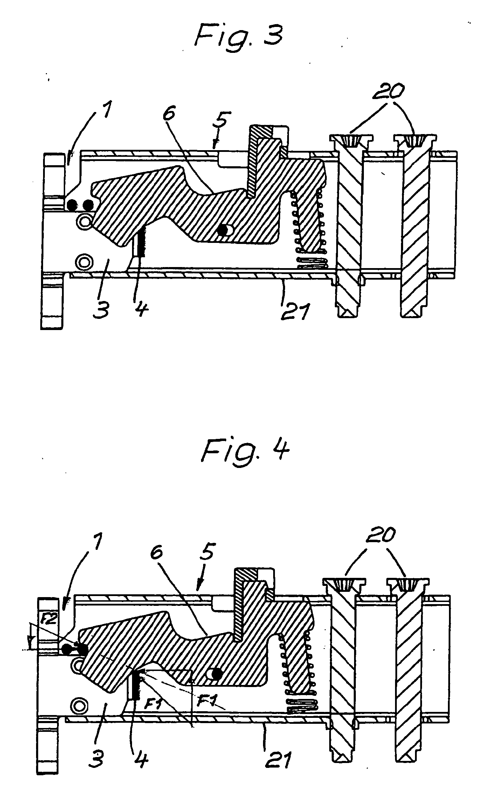

Zum Einsetzen der Halterung 1 wird diese zum Hebel 6 in die Seitenzarge 5 eingeschoben. Zur Führung dienen dabei die Unterkante 21 der Seitenzarge 5, die Querachse 15 und eine zweite Querachse 22. Wie Fig.2 zeigt liegt dann die Querplatte 4 an der Auflaufschräge 17 an und schwenkt den Hebel 6 im Uhrzeigersinn nach oben und schiebt ihn gleichzeitig bis zum Anschlag der Drehachse 7 im Langloch 8 nach hinten. Dabei ist der Abstand L2 grösser als L1. Nach Überwindung der Auflaufschräge 17 gleitet die Querplatte 4 wie Fig. 3 zeigt in die hakenförmige Ausnehmung 13, sodass der Hebel 6 durch die Federkraft 11 wieder zurückschwenkt und sich die Drehachse 7 im Langloch 8 nach vorne verschiebt.

In der Endstellung nach Fig. 4 nimmt der Hebel 6 wiederum seine Ausgangsstellung ein. Dabei ist die Halterung 1 in der Seitenzarge 5 verriegelt, wobei sich eine Selbsthemmung gegen eine Öffnungsbewegung durch Ziehen an der nicht dargestellten Blende und damit an der Halterung 1 ergibt. Die Öffnungskraft F1 der Halterung 1 verursacht eine durch die Querachse 15 verlaufende Gegenkraft F2. Dabei verursacht die Richtung der Wirkungslinie von F2 ein Drehmoment, welches den Hebel 6 in Verschlussrichtung dreht und somit die Selbsthemmung bewirkt. Zum gewollten Abziehen der Halterung 1 ist lediglich der Knopf 19 des hinteren Hebelarms 9 durch die Öffnung 18 gegen die Kraft der Feder 11 nach unten zu drücken. Dadurch wird dann die Querplatte 4 freigegeben und man kann die Halterung 1 entfernen.

## Patentansprüche

1. Befestigungsvorrichtung für zwei Möbelteile, wobei an dem einen, ersten Möbelteil ein zweiarmiger Hebel (6) um eine Drehachse (7) schwenkbar gelagert ist, dessen vorderer Hebelarm (12) zum Eingriff in eine Halterung (1) des anderen, zweiten Möbelteils, bestehend aus einer von einem Abstandsglied (3) getragenen Querplatte (4), etwa hakenförmig mit einer davor liegenden Auflaufschräge (17) ausgebildet ist und eine zusätzliche Vertiefung (14) aufweist,
**dadurch gekennzeichnet,**
**dass** das erste Möbelteil eine feste Querachse (15) als Endauflage für die Vertiefung (14) des vorderen Hebelarms (12) aufweist und dass der zum Eingriff in die Halterung (1) federbelastete (11) Hebel (6) mit einem Langloch (8) auf seiner Drehachse (7) längsverschiebbar begrenzt gelagert ist, wobei das Langloch (8) so bemessen ist, dass bei Auflage der Vertiefung (14) des vorderen Hebelarms (12) auf der Querachse (15) die Drehachse (7) am hinteren und beim Einschieben der Halterung (1) am vorderen Ende des Langloches (8) anliegt.

2. Befestigungsvorrichtung nach Anspruch 1, **dadurch gekennzeichnet, dass** das zweite Möbelteil als Frontblende mit der Halterung (1) und das erste als Schublade ausgebildet ist, wobei sich der zweiarmige Hebel (6) beidseits in den Schubladenzargen (5) befindet.

3. Befestigungsvorrichtung nach Anspruch 1 oder 2, **dadurch gekennzeichnet, dass** die Querachse (15) als zusätzliche Führung für die Halterung (1) ausgebildet ist.

4. Befestigungsvorrichtung nach einem der vorhergehenden Ansprüche, **dadurch gekennzeichnet, dass** die als Druckfeder ausgebildete Feder (11) auf einem etwa senkrecht zum hinteren Hebelarm (9) verlaufenden Ansatz (10) angeordnet ist.

5. Befestigungsvorrichtung nach Anspruch 2, **dadurch gekennzeichnet, dass** der hintere Hebelarm (9) durch eine oberseitige Ausnehmung (18) der Schubladenzarge (5) zugänglich ist.

6. Befestigungsvorrichtung nach einem der vorhergehenden Ansprüche, **dadurch gekennzeichnet, dass** der vordere Hebelarm (12) anschliessend an seine Vertiefung (14) für die Querachse (15) einen etwa rechtwinkeligen, schräg nach unten gerichteten Absatz (16) mit der Auflaufschräge (17) für die Halterung (1) aufweist, an welchen sich eine hakenförmige Ausnehmung (13) für die Halterung (1) anschliesst.

7. Befestigungsvorrichtung nach einem der vorhergehenden Ansprüche, **dadurch gekennzeichnet, dass** der vordere Hebelarm (12) beim Einschieben der Halterung (1) nach oben geschwenkt und das Langloch (8) nach hinten gegen die Drehachse (7) gedrückt ist, wobei der Abstand L2 zwischen der Drehachse (7) und der Querachse (15) grösser ist als der Abstand L1 zwischen der Vertiefung (14) und der Querachse (15).

8. Befestigungsvorrichtung nach einem der vorhergehenden Ansprüche, **dadurch gekennzeichnet, dass** sich in der eingeschnappten Stellung der Halterung (1) eine Wirkungslinie F2 zwischen der Auflage des vorderen Hebelarms (12) auf der Halterung (1) und der Querachse (15) ergibt, welche ein Drehmoment in Verschlussrichtung zur Selbsthemmung des Hebels (6) gegen ungewolltes Auslösen ergibt.

## Claims

1. A fastening device for two furniture parts, wherein on the one, first, furniture part a two-armed lever (6) is pivotally supported about a pivot (7), the front lever arm (12) of which is approximately hook-shaped with a run-on slope (17) in front for engagement in a fixing element (1) of the other, second, furniture part, consisting of a transverse plate (4) carried by a spacer member (3), and has an additional indentation (14),
**characterised in**
**that** the first furniture part has a fixed transverse shaft (15) as an end support for the indentation (14) of the front lever arm (12), and that the lever (6), which is springloaded (11) for engagement in the fixing element (1), is supported by a slot hole (8) so as to be capable of limited longitudinal displacement over its pivot (7), wherein the slot hole (8) is so dimensioned that, when the indentation (14) of the front lever arm (12) is resting on the transverse shaft (15), the pivot (7) is in contact with the rear end of the slot hole (8) and, when the fixing element (1) is pushed in, the pivot (7) is in contact with the front end of the slot hole (8).

2. A fastening device according to claim 1, **characterised in that** the second furniture part is in the form of a front panel having the fixing element (1) and the first is in the form of a drawer, wherein the two-armed lever (6) is situated on both sides in the drawer frames (5).

3. A fastening device according to claim 1 or 2, **characterised in that** the transverse shaft (15) is configured as an additional guide for the fixing element (1).

4. A fastening device according to any one of the preceding claims, **characterised in that** the spring (11), which is in the form of a compression spring, is arranged on a projection (10) extending approximately perpendicular to the rear lever arm (9).

5. A fastening device according to claim 2, **characterised in that** the rear lever arm (9) is accessible through an opening (18) in the upper side of the drawer frame (5).

6. A fastening device according to any one of the preceding claims, **characterised in that** the front lever arm (12) has, adjoining its indentation (14) for the transverse shaft (15), an approximately rectangular shoulder (16) oriented obliquely downwards and having the run-on slope (17) for the fixing element (1), which shoulder (16) is adjoined by a hook-shaped recess (13) for the fixing element (1).

7. A fastening device according to any one of the preceding claims, **characterised in that**, when the fixing element (1) is pushed in, the front lever arm (12) is pivoted upwards and the slot hole (8) is pushed backwards towards the pivot (7), wherein the distance L2 between the pivot (7) and the transverse shaft (15) is greater than the distance L1 between the indentation (14) and the transverse shaft (15).

8. A fastening device according to any one of the preceding claims, **characterised in that**, in the snapped-in position of the fixing element (1), a line of action F2 is produced between the support of the front lever arm (12) on the fixing element (1) and the transverse shaft (15), which produces a torque in the closure direction for self-locking the lever (6) against undesired release.

## Revendications

1. Dispositif de fixation pour deux éléments de meuble, sachant qu'un levier (6) à deux bras est monté à pivotement autour d'un axe de rotation (7) sur le premier élément de meuble, levier dont le bras de levier avant (12) est, afin de s'engager dans un organe de maintien (1) du deuxième élément de meuble constitué d'une plaque transversale (4) portée par un écarteur (3), réalisé approximativement en forme de crochet avec une surface de contact inclinée (17) située en avant, et présente un renfoncement supplémentaire (14),
**caractérisé en ce que** le premier élément de meuble présente un axe transversal fixe (15) comme appui final pour le renfoncement (14) du bras de levier avant (12), et **en ce que** le levier (6), sollicité par ressort (11) pour l'engagement dans l'organe de maintien (1), est monté avec une possibilité limitée de déplacement longitudinal sur son axe de rotation (7) par un trou oblong (8), sachant que le trou oblong (8) est dimensionné de telle sorte que, l'axe de rotation (7) s'applique contre l'extrémité arrière du trou oblong (8) lors de l'appui du renfoncement (14) du bras de levier avant (12) sur l'axe transversal (15), et contre l'extrémité avant lors de l'insertion de l'organe de maintien (1).

2. Dispositif de fixation selon la revendication 1, **caractérisé en ce que** le deuxième élément de meuble est réalisé sous forme de bandeau pourvu de l'organe de maintien (1), et le premier élément de meuble sous forme de tiroir, sachant que le levier (6) à deux bras se trouve de part et d'autre dans les encadrements (5) du tiroir.

3. Dispositif de fixation selon la revendication 1 ou 2, **caractérisé en ce que** l'axe transversal (15) est conçu comme guide supplémentaire pour l'organe de maintien (1).

4. Dispositif de fixation selon l'une des revendications précédentes, **caractérisé en ce que** le ressort (11) réalisé sous forme de ressort de compression est disposé sur une saillie (10) s'étendant environ perpendiculairement au bras de levier arrière (9).

5. Dispositif de fixation selon la revendication 2, **caractérisé en ce que** le bras de levier arrière (9) est accessible par un évidement (18) sur le côté supérieur de l'encadrement de tiroir (5).

6. Dispositif de fixation selon l'une des revendications précédentes, **caractérisé en ce que** le bras de levier avant (12) présente, à la suite de son renfoncement (14) pour l'axe transversal (15), un décrochement (16) environ à angle droit, dirigé en oblique vers le bas, qui est pourvu de la surface de contact inclinée (17) pour l'organe de maintien (1) et qui est suivi d'un évidement en forme de crochet (13) pour l'organe de maintien (1).

7. Dispositif de fixation selon l'une des revendications précédentes, **caractérisé en ce que**, lors de l'insertion de l'organe de maintien (1), le bras de levier avant (12) est pivoté vers le haut et le trou oblong (8) est pressé vers l'arrière contre l'axe de rotation (7), sachant que la distance L2 entre l'axe de rotation (7) et l'axe transversal (15) est supérieure à la distance L1 entre le renfoncement (14) et l'axe transversal (15).

8. Dispositif de fixation selon l'une des revendications précédentes, **caractérisé en ce que**, dans la position enclenchée de l'organe de maintien (1), on obtient, entre l'appui du bras de levier avant (12) sur l'organe de maintien (1) et l'axe transversal (15), une ligne d'action F2 qui produit un couple dans la direction de fermeture pour un autoblocage du levier (6) à l'encontre d'une libération non intentionnelle.
